# EUROPEAN PATENT SPECIFICATION

(11) **EP 0 519 341 B1**
(45) Date of publication and mention of the grant of the patent: **14.08.1996**
(21) Application number: 92109898.4
(22) Date of filing: 12.06.1992
(51) Int. Cl.: C08F 255/00

(54) **Process for grafting vinyl monomers on particulate olefin polymers**
Verfahren zur Pfropfpolymerisation von Vinylmonomeren auf olefinischen Polymerteilchen
Procédé de greffage de monomères vinyliques sur des particules de polymères à base d'oléfine

(30) Priority: 21.06.1991 US 718681
(43) Date of publication of application: 23.12.1992
(73) Proprietor: MONTELL NORTH AMERICA INC., Wilmington Delaware 19850-5439 (US)
(72) Inventor: DeNicola, Anthony J., Jr., Newark, Delaware 19713 (US); Galli, Paolo, I-44100 Ferrara (IT); Guhaniyogi, Suhas C., Bear, Delaware 19701 (US); Smith, Jeanine A., West Chester, Pennsylvania 19382 (US)
(74) Representative: Fuchs, Luderschmidt & Partner Patentanwälte

(56) References cited:
- EP-A- 0 437 808
- EP-A- 0 439 079
- DE-A- 2 041 204
- Encycl. of Polymer Science and Technology, Vol. 7, pp 507-508

## Description

It is known to graft non-homopolymerizable vinyl monomers such as maleic anhydride onto polyolefins. However, the various known methods have a number of disadvantages.

One known method involves dissolving the polyolefin in a solvent, typically a hydrocarbon solvent, followed by the addition of a peroxide initiator and maleic anhydride. The grafting is typically carried out at temperatures in excess of 125°C, more usually from 130 to 150°C. This method of grafting is costly, in part because of the need to recover the solvent. Moreover, the amount of monomer such as maleic anhydride which can be grafted on the polyolefin is low, usually no more than 3% by weight. When the polyolefin is polypropylene, grafting by this process results in considerable degradation because of the relatively high temperatures employed. When polyethylene is the polyolefin to be grafted, there is undesirable cross-linking, again as a result of the relatively high grafting temperatures.

Another prior art grafting technique involves an extrusion operation, wherein the monomer, e.g., maleic anhydride, and the peroxide initiator, are compounded with the polyolefin and the resulting mixture is extruded. Inasmuch as the extrusion must be carried out at a relatively high temperature, there is, as with polypropylene, undesirable degradation, and with polyethylene, undesired cross-linking. Further, the grafting efficiency is poor, so that generally the amount of monomer, such as maleic anhydride, that can be grafted onto the polyolefin is 2% by weight or lower. Moreover, it is difficult and costly to remove unreacted monomer from the polyolefin.

Another prior art grafting technique, involves a dry process wherein the polyolefin in powder form is placed in a closed reactor with agitation and, in the absence of oxygen, the peroxide initiator and monomer are introduced. Relatively high temperatures are required, generally at least 130°C and frequently higher. This technique is disadvantageous because of undesired degradation (with polypropylene) or excessive cross-linking (with polyethylene).

In contrast, and as more fully described hereinafter, the present invention substantially overcomes the foregoing disadvantages (a) by the use of a porous polyolefin, (b) by conducting the grafting at considerably lower temperatures, typically 60 to 125°C when using a peroxide initiator, and/or (c) by conducting the grafting from room temperatures to 100°C when using radiation for the generation of free radicals for grafting, or by a combination of (a) and (b) or (a) and (c). As a result, there is higher grafting efficiency, a reduction or elimination of degradation and/or cross-linking, and a retention of molecular weight. When the porous polyolefin is used, one is able to work with a free flowing powder that is capable of high liquid absorption, with little or no caking.

This invention provides a uniformly grafted particulate polyolefin material formed by the free radical-initiated grafting of at least one non-homopolymerizing vinyl monomer at free radical sites on a particulate olefin polymer material having (a) a pore volume fraction of at least 0.07 wherein more than 40% of the pores have a diameter larger than 1 micron; and (b) a weight average diameter in the range of 0.4 to 7 mm. The amount of vinyl monomer grafted to the particulate olefin polymer material is about 0.1 to 10%, preferably about 0.3 to 5.0%, of the total weight of the grafted olefin polymer product, and the grafted vinyl monomer is uniformly distributed throughout the particles of olefin polymer material.

Both the pore volume of at least 0.07 and the pore diameter wherein m ore than 40% of the pores in the particle have a diameter in excess of 1 micron are critical to the preparation of the grafted olefin polymer material of this invention. In such olefin polymer materials grafting of the vinyl monomer takes place throughout the interior of the particulate material as well as on the external surface thereof, resulting in a substantially uniform distribution of the graft polymer throughout the olefin polymer particle. Aside from these materials, the commercially available ethylene and propylene polymers in particulate form, even those having a reasonably high surface area, and porosity, do not provide graft polymers with internal uniform distribution of the grafted vinyl monomer since they lack the combination of the requisite pore diameter and large pore volume fraction essential for producing the grafted olefin polymer product of this invention.

According to a further aspect of the invention, the grafted particulate olefin polymer material can be prepared by either of the following methods.

Initially, the grafted polyolefin material may be prepared by
(a) irradiating a particulate olefin polymer material at a temperature in the range of 10° to 85°C with high-energy ionizing radiation to produce free-radical sites in the olefin polymer material;
(b) treating the irradiated particulate olefin polymer material at a temperature up to 100°C for a period of at least 3 minutes, with 0.2 to 20 percent by weight, based on the total weight of olefin polymer and grafting monomer used, of at least one non-free radical homopolymerizing but free-radical graftable vinyl monomer;
(c) simultaneously or successively, in either order,
   (1) deactivating substantially all residual free radicals in the resultant grafted particulate olefin polymer material, and
   (2) removing any unreacted grafting monomer from said material;
the particulate olefin polymer material being maintained in a substantially non-oxidizing environment throughout said steps at least until after the deactivation of residual free radicals has been completed.

According to the second method of the invention, the particulate olefin polymer material is treated at a temperature of 60° to 125°C with 0.1 to 6.0 pph (parts by weight per 100 parts by weight of the olefin polymer material) of an organic chemical compound which is a free radical polymerization initiator and has a decomposition half-life of 1 to 240 minutes at the temperature employed.

Over a time period which coincides with, or follows, the period of initiator treatment, with or without overlap, the polymer material is treated with 0.2 to 20 percent by weight, based on the total weight of olefin polymer and grafting monomer used, of at least one grafting monomer. The temperature employed during any period of monomer treatment is within the same range as indicated above with respect to the initiator treatment.

After the grafting period, i.e., the period of treatment with the grafting monomer, and any subsequent holding period at the reaction conditions, any unreacted monomer is removed from the resultant grafted particulate olefin polymer material, and the decomposition of any unreacted initiator and deactivation of any residual free radicals are promoted, e.g., by a temperature increase. During the entire process the polymer material is maintained in a substantially non-oxidizing environment.

All parts and percentages used in this specification are by weight unless otherwise noted.

The olefin polymer material useful in the practice of the methods of this invention for making graft copolymers of olefin polymers is
(a) a homopolymer of a linear or branched C₂-C₈ 1-olefin;
(b) a random copolymer of a linear or branched C₂-C₈ 1-olefin with a second olefin selected from the group consisting of C₂-C₁₀ 1-olefins, provided that, when the second olefin is ethylene the maximum polymerized ethylene content is about 10%, preferably about 4%, when the olefin is propylene and the second olefin is a C₄-C₁₀ 1-olefin the maximum polymerized content thereof is about 20%, preferably about 16%, and when the olefin is ethylene and the second olefin is a C₃-C₁₀ 1-olefin the maximum polymerized content thereof is about 10%, preferably about 5%;
(c) a terpolymer of a linear or branched C₃-C₈ 1-olefin and two different olefins selected from the group consisting of ethylene and C₄-C₈ 1-olefins, provided that, when ethylene is one of the two different olefins the maximum polymerized ethylene content is about 5%, preferably about 4%, and when each of the two different olefins is a C₄-C₁₀ 1-olefin, the maximum polymerized content of the two different C₄-C₈ 1-olefins is about 20%, preferably about 16%; or
(d) a homopolymer of (a) or a random copolymer of (b), impact-modified with about 10 to 60% of
   (i) an ethylene-propylene rubber having an ethylene content of about 7 to 70%, preferably about 10 to 40%, and most preferably an ethylene-propylene rubber having an ethylene content of about 7 to 40%,
   (ii) an ethylene/butene-1 copolymer rubber (EBR) having an ethylene content of about 30 to 70%,
   (iii) a propylene/butene-1 copolymer rubber (PBR) having a butene-1 content of about 30 to 70%,
   (iv) an ethylene/propylene diene monomer rubber (EPDM) having an ethylene content of about 30 to 70% and diene content of about 1 to 10%,
   (v) an ethylene/propylene/butene terpolymer rubber (EPBR) having a propylene content of about 1 to 10% and butene content of about 30 to 70% or a propylene content of about 30 to 70% and a butene content of about 1 to 10%.

The C₂-C₈ 1-olefins which can be used in the preparation of the above olefin polymer materials include ethylene, propylene, 1-butene, 3-methyl-1-butene, 3,4-dimethyl-1-butene, 1-pentene, 4-methyl-1-pentene, 1-hexene, 3-methyl-1-hexene, 1-heptene, and the like.

C₃-C₁₀ 1-olefins which can be used to prepare olefin polymer materials as described above include linear and branched olefins which have at least 3 carbon atoms.

When the olefin polymer is an ethylene homopolymer it has a density of 0.91 g/cm³ or greater, and when the olefin polymer is an ethylene copolymer with a C₃₋₁₀ alpha-olefin it has a density of 0.,91 g/cm³ or greater. Suitable ethylene copolymers include ethylene/butene-1, ethylene/hexene-1 and ethylene/4-methyl-1-pentene. The ethylene copolymer can be a HDPE or a LLDPE, and the ethylene homopolymer can be a HDPE or a LDPE. Typically the LLDPE and LDPE have densities of 0.91 g/cm³ or greater and the HDPE have densities of 0.95 g/cm³ or greater.

Homopolymers and random copolymers of ethylene, propylene and 1-butene are preferred. With respect to ethylene, HDPE and LLDPE are preferred.

Suitable particulate forms of the olefin polymer material used in the present method include powder, flake, granulate, spherical, cubic and the like. Spherical particulate forms have a pore volume fraction of at least 0.07, preferably at least 0.2. The spherical particulate olefin polymers having pore volume fractions of at least 0.2 are obtainable using catalysts of the type described in Examples 2, 3 and 4 of European Patent Application EP 0395083.

According to the radiation method of this invention, free radical or active sites are formed on the particulate olefin polymer material by irradiation before the polymer is exposed to the grafting monomer(s). Irradiation in the absence of monomer is advantageous although the degree of benefit varies from monomer to monomer.

The radiation is carried about according to the method and procedure described in U.S. Patent Application Serial No. 07/604,553

The peroxide treatment used in this invention is carried out in accordance with the method and procedure described in U.S. Patent Application Serial No. 07/625,287.

The method of this invention embodies a combination of steps which together permit olefin grafted polymers to be obtained not only in high conversions (monomer consumption) but also with a high degree of graft efficiency. Moreover, degradation of the backbone olefin polymer is minimized, thereby avoiding the production of a grafted polymer having a melt flow rate which is substantially higher than that of the starting backbone olefin polymer, a condition that can adversely affect the processing behavior of the grafted polymer.

Examples of grafting monomers useful in accordance with this invention are unsaturated cyclic anhydrides and their aliphatic diester and diacid derivatives. Suitable grafting monomers are selected from the group consisting of maleic anhydride, C₁₋₁₀ linear and branched dialkyl maleate, C₁₋₁₀ linear and branched dialkyl fumarate, itaconic anhydride, C₁₋₁₀ linear and branched dialkyl esters of itaconic acid, maleic acid, fumaric acid, itaconic acid, and mixtures thereof.

### Example 1

Four hundred grams of a finely divided porous propylene homopolymer (LBD-406A commercially available from HIMONT Italia S.r.l.) are placed in a 1-liter glass reactor equipped with a heating jacket and a helical impeller. The polymer is in the form of generally spherical particles having the following characteristics: nominal melt flow rate (ASTM Method D 1238-82, Condition L) 8 dg/min; intrinsic viscosity (method of J. H. Elliott et al., J. Applied Polymer Sci. 14, 2947-2963 (1970) - polymer dissolved in decahydronaphthalene at 135°C) 2.4 dl/g; weight average diameter 2.0 mm; and pore volume fraction (mercury porosimetry method) 0.33. More than 90% of the pores in the porous particles are larger than 1 micron in diameter.

The reactor is purged with nitrogen at room temperature for 15 minutes (to an active oxygen content of less than 0.004% by volume), heated to 100°C by circulating hot oil through the reactor jacket, and equilibrated to that temperature with continued nitrogen purging and stirring at 3,75 s⁻¹ (225 rpm). Thereafter, purging is stopped, the reactor pressure is adjusted to 14 kPa, and 20 ml of an oxygen-free mineral spirit solution of tert-butylperoxy-2-ethylhexanoate containing 10 g of the peroxy ester having a half life of 26 minutes at 100°C is added. After 15 minutes, 13.2 g of maleic anhydride, which is previously heated to 60°C to convert it to a liquid state, is sprayed into the reactor at a rate of 0.2 pph (parts per 100 parts polypropylene, by weight) per minute. The total time of addition is about 16 minutes. The reactor is maintained at 100°C and stirring continued for 60 minutes after all the maleic anhydride has been added.

At the end of the grafting period, the reactor is purged with nitrogen for 15 minutes, and the reactor contents are then heated to 130°C by purging with heated nitrogen. The reactor temperature is maintained at 130°C for 30 minutes during which time any unreacted maleic anhydride is swept out of the reactor in the nitrogen flow. After cool-down under a nitrogen blanket, the free-flowing solid product remaining in the reactor is discharged therefrom. The product is isolated in good yield. The product is characterized by excellent molecular weight retention.

### Comparative Example

The procedure and ingredients of Example 1 are used with the exception that the reaction temperature is 150°C. The peroxide is Lupersol 101 (Registered Trademark) with a half-life of 30 minutes at the reaction temperature, and the quantity of peroxide used in 5.6 ml. The peroxide is 98% pure. The product is characterized as having a substantial degree of degradation.

### Example 2

This example illustrates the grafted olefin polymer of this invention and a method of making same.

### (a) Irradiation of the Polymer

A finely divided porous propylene homopolymer (LBD-520A commercially available from HIMONT Italia S.r.l.) having the following characteristics: nominal melt flow rate (ASTM Method D 1238-82, Condition L) 8 dg/min; intrinsic viscosity (method of J. H. Elliott et al., J. Applied Polymer Sci. 14, 2947-2963 (1970) - polymer dissolved in decahydronaphthalene at 135°C) 1.89 dl/g; extractability in methylene chloride 2.0 wt. %; weight average diameter 1.88 mm; and pore volume fraction (mercury porosimetry method) 0.45. More than 90% of the pores in the porous particles are larger than 1 µm in diameter.

The polypropylene (400 grams), substantially free of active oxygen, is placed on a moving conveyor belt to form a powder bed, approximately 2 cm thick, which is passed by conveyor belt through an electron beam generated by a 2 MeV Van de Graaf generator operating at a 312 µA beam current. The conveyor belt speed is adjusted to dose rate of about 30 Mrad/min. The environment or atmosphere within the enclosed radiation chamber consists essentially of nitrogen gas, the active oxygen content being maintained at less than 0.004% by volume. The chamber is at ambient temperature (about 23°C).

### (b) Treatment with Grafting Monomer

The irradiated polypropylene is conveyed from the radiation chamber into a graft polymerization reactor at ambient temperature (23°C) where it is agitated and sprayed with 13.2 grams of liquid maleic anhydride monomer (3.3% maleic anhydride based on the total weight of monomer and polypropylene), added to the agitated powder at a rate of about 1.0 g/min. A nitrogen environment or atmosphere is maintained in the grafting reactor and in the transfer system for conveying the irradiated particles from the radiation chamber to the grafting reactor so that the active oxygen content is less than 0.004% by volume. The time elapsing between the exposure of the polypropylene to the electron beam and its treatment with the monomer is about 2 minutes.

Agitation of the maleic anhydride/polypropylene mixture is continued for 30 minutes.

### (c) Deactivation of Residual Free Radicals

After completion of the grafting reaction, the reactor contents are heated to 140°C by purging the reactor with heated nitrogen (supplemented by an electric heating mantle), and held at 140°C for 30 minutes. The nitrogen flow rate is high enough to provide sufficient heat transfer to minimize heat-up time as well as sufficient mass transfer to remove any unreacted monomer present. The product is isolated in good yield and is characterized by excellent molecular weight retention.

## Claims

1. A process for preparing a uniformly grafted particulate olefin polymer formed by the free radical-initiated grafting of at least one non-homopolymerizing vinyl monomer selected from the group consisting of unsaturated cyclic anhydrides and their aliphatic diester and diacid derivatives at free radical sites on a particular olefin polymer having (a) a pore volume fraction of at least 0.07 wherein more than 40 % of the pores have a diameter larger than 1 micron; and (b) weight average diameter in the range of 0.4 to 7 mm, which comprises:
in a first version
(a) irradiating the particulate olefin polymer at a temperature in the range of from 10°C to 85°C with high-energy ionizing radiation to produce free-radical sites in the olefin;
(b) treating the irradiated particulate olefin polymer at a temperature up to 100°C for a period of at least 3 minutes, with from 0.2 to 20 % by weight, based on the total weight of olefin polymer and grafting monomer used, of at least one non-free radical homopolymerizing but free-radical graftable vinyl monomer selected from the group consisting of unsaturated cyclic anhydrides and their aliphatic diester and diacid derivatives
(c) simultaneously or successively, in either order,
(1) deactivating residual free radicals in the resultant grafted particulate olefin polymer; and
(2) removing any unreacted grafting monomer from said olefin; or
in a second version
(a') treating the olefin polymer at a temperature of from 60°C to 125°C with from 0.1 to 6.0 pph (parts by weight per 100 parts by weight of the olefin polymer) of an organic compound which is a free radical polymerization initiator and has a decomposition half-life of 1 to 240 minutes at the temperature employed; and
(b') over a time period which coincides with, or follows, the period of initiator treatment, with or without overlap, treating the olefin polymer with 0.2 to 20 % by weight, based on the total weight of olefin polymer and grafting monomer used, with at least one grafting monomer selected from the group consisting of unsaturated cyclic anhydrides and their aliphatic diester and diacid derivatives at the temperature employed above in step (a').
said olefin polymer being maintained in a substantially non-oxidizing environment during the entire process.

2. Particulate olefin polymer uniformly grafted with a non-homopolymerizing vinyl monomer selected from the group consisting of unsaturated cyclic anhydrides and their aliphatic diester and diacid derivatives according to the process of claim 1.

3. Particulate olefin polymer uniformly grafted with maleic anhydride according to the process of claim 1.

## Patentansprüche

1. Verfahren zur Herstellung eines gleichmäßig gepfropften teilchenförmigen Polefinpolymeren, gebildet durch das, durch freie Radikale eingeleitete Pfropfen von zumindest einem nicht-homopolymerisierenden Vinylmonomeren, ausgewählt aus der aus ungesättigten cyclischen Anhydriden und deren aliphatischen Diester- und Disäurederivaten bestehenden Gruppe, an Stellen freier Radikale auf ein spezielles Olefinpolymer mit (a) einer Porenvolumenfraktion von zumindest 0,07, wobei mehr als 40% der Poren einen Durchmesser von mehr als 1 Mikron aufweisen, und (b) einem Gewichtsdurchschnitts-Durchmesser im Bereich von 0,4-7mm, umfassend:
**in einer ersten Variante**
(a) Bestrahlen des teilchenförmigen Olefinpolymeren bei einer Temperatur im Bereich von 10°C-85°C mit einer ionisierenden Strahlung hoher Energie, um im Olefin Stellen freier Radikale zu bilden;
(b) Behandeln des bestrahlten teilchenförmigen Olefinpolymeren bei einer Temperatur bis zu 100°C während zumindest 3 Minuten mit 0,2-20 Gew.%, bezogen auf das Gesamtgewicht des benutzten Olefinpolymeren und Pfropfmonomeren, zumindest eines, durch freie Radikale nicht homopolymerisierenden, durch freie Radikale jedoch pfropfbaren Vinylmonomeren, ausgewählt aus der aus ungesättigten cyclischen Anhydriden und deren aliphatischen Diester- und Disäurederivaten,
(c) gleichzeitiges oder in irgendeiner Reihenfolge aufeinanderfolgendes
(1) Desaktivieren restlicher freier Radikale in dem erhaltenen gepfropften teilchenför migen Olefinpolymeren; und
(2) Entfernen jeglichen nicht-umgesetzten Pfropfmonomeren vom Olefin; oder
**in einer zweiten Variante**
(a') Behandeln des Olefinpolymeren bei einer Temperatur von 60°-125° mit 0,1 bis 6,0 Teilen pro 100 Gewichtsteilen des Olefinpolymeren einer organischen Verbindung, die ein Initiator für eine Radikalpolymerisation ist und eine Zersetzungshalbwertszeit von 1-240 Minuten bei der angewandten Temperatur besitzt; und
(b') Behandeln innerhalb eines Zeitraums, der mit dem Zeitraum der Initiatorbehandlung zusammenfällt oder diesem, mit oder ohne Überlappung, folgt, des Olefinpolymeren mit 0,2-20 Gew.%, bezogen auf das Gesamtgewicht des benutzten Olefinpolymeren und Pfropfpolymeren, mit zumindest einem Pfropfmonomeren, ausgewählt aus der aus ungesättigten cyclischen Anhydriden und deren aliphatischen Diester- und Disäurederivaten, bei der in Stufe (a') angewandten Temperatur,
wobei das Olefinpolymer während des gesamten Verfahrens in einer im wesentlichen nicht-oxidierenden Umgebung gehalten wird.

2. Teilchenförmiges Olefinpolymer, das gemäß dem Verfahren des Anspruchs 1 mit einem nicht-homopolomerisierenden Vinylmonomeren gleichförmig gepfropft ist, welch' letzeres aus der Gruppe ausgewählt wurde, die aus ungesättigten cyclischen Anhydriden und deren aliphatischen Diester- und Disäurederivaten besteht.

3. Teilchenförmiges Olefinpolymer, das gemäß dem Verfahren des Anspruchs 1 mit Maleinsäureanhydrid gleichmäßig gepfropft ist.

## Revendications

1. Procédé pour préparer un polymère oléfinique particulaire greffé de manière uniforme, obtenu par le greffage à déclenchement radicalaire d'au moins un monomère vinylique inapte à une homopolymérisation, choisi parmi le groupe constitué par des anhydrides cycliques insaturés et leurs dérivés de diesters et de diacides aliphatiques, aux sites de radicaux libres sur un polymère oléfinique particulier possédant (a) une fraction volumique de pores d'au moins 0,07, dans lequel plus de 40% des pores possèdent un diamètre supérieur à 1 micron; et (b) un diamètre moyen en poids dans le domaine de 0,4 à 7 mm, qui comprend le fait de:
dans une première version
(a) exposer le polymère oléfinique particulaire à une température dans le domaine de 10°C à 85°C à un rayonnement ionisant haute énergie pour former les sites de radicaux libres dans l'oléfine;
(b) traiter le polymère oléfinique particulaire exposé au rayonnement à une température allant jusqu'à 100°C pendant un laps de temps d'au moins 3 minutes, avec de 0,2 à 20% en poids, basés sur le poids total du polymère oléfinique et du monomère de greffage utilisé, d'au moins un monomère vinylique inapte à une homopolymérisation radicalaire, mais qui peut être greffé par voie radicalaire, choisi parmi le groupe constitué par des anhydrides cycliques insaturés et leurs dérivés de diesters et de diacides aliphatiques;
(c) simultanément ou successivement, dans n'importe quel ordre,
(1) désactiver les radicaux libres résiduels dans le polymère oléfinique particulaire greffé résultant; et
(2) éliminer de ladite oléfine, tout monomère de greffage n'ayant pas réagi; ou
dans une seconde version
(a') traiter le polymère oléfinique à une température de 60°C à 125°C avec de 0,1 à 6,0 pph (parties en poids par 100 parties en poids du polymère oléfinique) d'un composé organique, à savoir un initiateur de polymérisation radicalaire, et qui possède une demi-vie de décomposition de 1 à 240 minutes à la température employée; et
(b') pendant un laps de temps qui coïncide avec ou qui suit la période de traitement à l'aide de l'initiateur, avec ou sans chevauchement, traiter le polymère oléfinique avec de 0,2 à 20% en poids, basés sur le poids total du polymère oléfinique et du monomère de greffage utilisé, avec au moins un monomère de greffage choisi parmi le groupe constitué par des anhydrides cycliques insaturés et leurs dérivés de diesters et de diacides aliphatiques à la température employée ci-dessus à l'étape (a'),
ledit polymère oléfinique étant maintenu dans un environnement essentiellement non oxydant tout au long du processus.

2. Polymère oléfinique particulaire greffé de manière uniforme avec un monomère vinylique inapte à une homopolymérisation, choisi parmi le groupe constitué par des anhydrides cycliques insaturés et leurs dérivés de diesters et de diacides aliphatiques conformément au procédé de la revendication 1.

3. Polymère oléfinique particulaire greffé de manière uniforme avec de l'anhydride maléique conformément au procédé de la revendication 1.
